# FASCICULE DE BREVET EUROPEEN

(11) **EP 1 635 681 B1**
(45) Date de publication et mention de la délivrance du brevet: **27.12.2006**
(21) Numéro de dépôt: 04766051.9
(22) Date de dépôt: 16.06.2004
(51) Int. Cl.: A47J 31/40, A47J 31/06

(54) **DISPOSITIF DE PRODUCTION DE BOISSON PAR INFUSION**
VORRICHTUNG ZUR HERSTELLUNG EINES GETRÄNKS DURCH AUFGIESSEN
DEVICE FOR PRODUCING A DRINK BY INFUSION

(30) Priorité: 25.06.2003 FR 0350253
(43) Date de publication de la demande: 22.03.2006
(73) Titulaire: COMPAGNIE MEDITERRANEENNE DES CAFES S.A., 06510 Carros (FR)
(72) Inventeur: BLANC, Jean-Pierre Office Méditerranéen de Brevets, F-06000 Nice (FR)
(74) Mandataire: Decobert, Jean-Pascal
(86) Numéro de dépôt international: PCT/EP2004/051134
(87) Numéro de publication internationale: WO 2004/112555

(56) Documents cités:
- WO-A-95/07041
- WO-A-95/17121
- US-B1- 6 520 070

## Description

La présente invention concerne un dispositif de production de boisson par infusion ainsi qu'une machine à café équipée d'un tel dispositif.

L'invention trouvera son application dans le domaine de la fabrication de machines à café du type à production de boissons individuelles ou en plus larges quantités, à usage hôtelier ou professionnel. En particulier, l'invention s'applique notamment aux machines à café utilisant des conditionnements de café moulu sous forme de doses prêtes à l'utilisation telles que les doses prévues dans le document WO-A- 95/07041.

Les machines à café actuellement sur le marché comportent une chambre d'infusion permettant la réception d'une dose de mouture soit emballée soit présentée de façon brute. II n'est donc possible d'utiliser qu'une seule dose à la fois, ce qui limite la souplesse d'usage des machines à café, notamment lorsque l'on souhaite faire une quantité de café plus importante ou que l'on souhaite varier l'intensité des arômes.

La présente invention permet de remédier à cet inconvénient et présente, pour ce faire, un dispositif de production de boisson ainsi qu'une machine à café améliorée.

L'invention a l'avantage de présenter plusieurs chambres d'infusion placées en série dans le circuit de production de boisson de façon à pouvoir utiliser une ou plusieurs doses de mouture. On peut donc parfaitement adapter le fonctionnement du dispositif aux besoins.

D'autres buts et avantages apparaîtront au cours de la description qui suit d'un mode préféré de réalisation de l'invention qui n'est cependant pas limitatif.

La présente invention concerne un dispositif de production de boisson par infusion de mouture d'une substance à infuser, comportant une chambre d'infusion apte à recevoir la mouture et un circuit d'eau chaude traversant ladite chambre d'infusion. Selon l'invention, ce dispositif comporte au moins une chambre d'infusion additionnelle placée en série avec la première chambre d'infusion dans le circuit d'eau chaude.

Suivant des possibilités préférées mais non limitatives, ce dispositif est tel que :
- il comporte une chambre d'infusion additionnelle,
- il comporte une partie centrale fixe coopérant avec une première partie latérale mobile pour former la première chambre d'infusion et avec une deuxième partie mobile pour former la chambre d'infusion additionnelle,
- le circuit d'eau chaude comprend un circuit d'extraction traversant les chambres d'infusion et un circuit périphérique parallèle au circuit d'extraction entre une vanne d'entrée, en amont des chambres d'infusion, et une vanne de sortie, en aval des chambres d'infusion, lesdites vannes étant configurées pour permettre la circulation en circuit fermé dans le circuit d'extraction et le circuit périphérique,
- la vanne d'entrée possède une voie connectée à l'alimentation en eau chaude,
- la vanne de sortie possède une voie connectée à la sortie de boisson,
- il présente des moyens pour inverser la circulation d'eau chaude au travers des chambres d'infusion,
- il comporte une pompe pour la mise en circulation de l'eau chaude, ladite pompe ayant un sens de fonctionnement commandé pour former les moyens pour inverser la circulation d'eau chaude au travers des chambres d'infusion,
- le circuit d'extraction et le circuit périphérique présentent globalement un volume correspondant à celui de la boisson à produire.

L'invention concerne également une machine à café utilisable avec des conditionnements de café moulu caractérisée par le fait qu'elle comporte un dispositif selon l'invention.

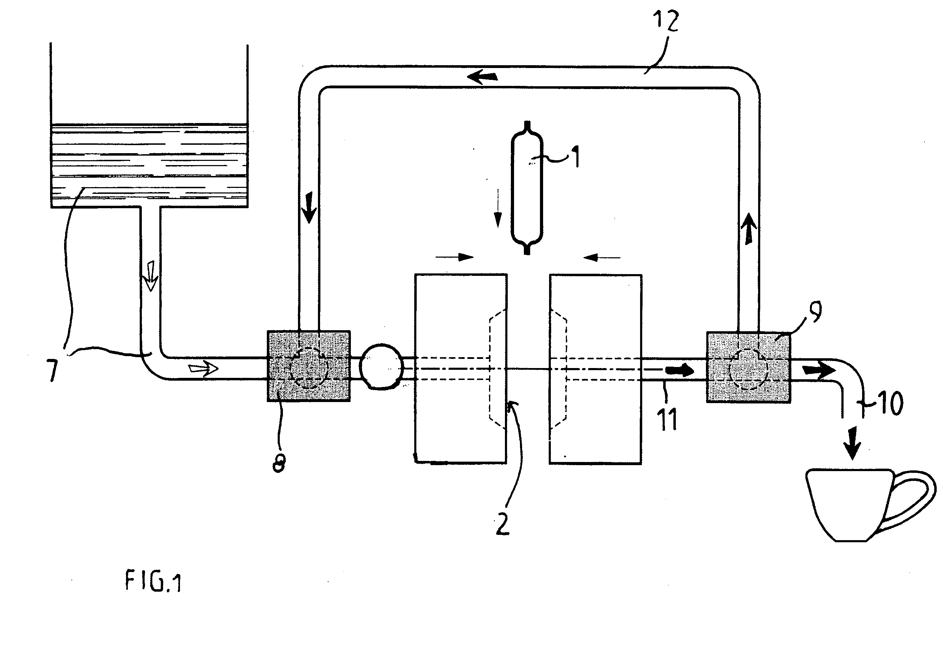

La figure 1 schématise un dispositif à une seule chambre d'infusion.

Pour la suite de la description, on décrit, un mode de réalisation de l'invention utilisant des conditionnements 1 se présentant sous forme de dosettes renfermant la mouture. En particulier, on pourra utiliser des dosettes du type présenté dans la publication WO-A- 95/07041. On pourra aussi utiliser des dosettes sans armature périphérique, moins rigide ou encore des capsules. Bien entendu, l'invention, s'applique également à de la mouture non emballée.

On décrit ici le cas d'un dispositif présentant deux chambres d'infusion bien que cette situation n'est pas limitative de l'invention. Les chambres d'infusion sont formées pour partie dans une partie fixe et pour partie dans une partie latérale, respectivement.

De façon préférée, les chambres d'infusion comportent deux parties mobiles en rapprochement et en éloignement et/ou en rotation de façon à ouvrir et fermer les chambres d'infusion suivant les phases de fonctionnement. Concernant ces mobilités, on fait ici explicitement référence aux mobilités décrites dans les documents WO-A- 95/07041, WO-A 95/17121 ou encore aux publications WO-A 00/38558 et WO-A 00/44268. Les phases d'introduction, d'éjection ainsi que les phases d'ouverture ou de fermeture des chambres pourront être conformes à celles présentées dans ces antériorités.

On a représenté un circuit d'eau chaude dont une partie, ici dénommée circuit d'extraction 11, traverse les chambres d'infusion. En amont du circuit d'extraction 11, le circuit d'eau chaude est relié à une alimentation en eau chaude 7 ici purement schématisée pour l'explication. On pourra utiliser un système conventionnel d'alimentation en eau chaude comprenant un réservoir d'eau froide, une chaudière et une sortie de la chaudière apte à alimenter en eau chaude le circuit d'injection.

Toujours de façon conventionnelle, le circuit comporte une partie de sortie 10 apte à délivrer la boisson produite.

Suivant une variante préférée de l'invention, le circuit d'eau chaude comprend outre le circuit d'extraction 11, un circuit périphérique 12 permettant une recirculation du liquide après infusion, soit dans le même sens que précédemment soit dans un sens inverse. Dans ce cadre, des moyens sont présents pour inverser la circulation d'eau chaude au travers de la chambre d'infusion.

Dans le mode de réalisation ici décrit, ces moyens sont réalisés par une pompe placée dans le circuit d'eau chaude et apte à être commandée dans les deux sens de fonctionnement pour inverser la circulation.

A titre indicatif, la pompe est positionnée en amont de la chambre d'infusion. Sa commande peut être manuelle (l'utilisateur détermine par un interrupteur le sens de circulation de l'eau) ou encore automatisée.

Dans le cas illustré, le circuit d'eau comprend outre le circuit d'extraction 11, un circuit périphérique repéré 12 apte à constituer une portion de circulation parallèle au circuit d'extraction 11. Les parties 11 et 12 du circuit d'eau se rejoignent en amont de la chambre d'infusion et en aval de la chambre additionnelle. Plus précisément, une vanne d'entrée 8 est prévue pour relier le circuit d'extraction 11 et le circuit périphérique 12 ainsi que pour connecter l'alimentation en eau chaude 7. En aval de la chambre d'infusion, une vanne de sortie 9 est présente afin de relier le circuit d'extraction 11, le circuit périphérique 12 et la sortie d'évacuation de la boisson 10.

Toujours de façon préférée, le volume global du circuit d'extraction 11 et du circuit périphérique 12 présente sensiblement un volume équivalent à celui de la boisson à produire.

On décrit ci-après une possibilité de fonctionnement du dispositif de l'invention.

La mise en circulation de l'eau chaude depuis l'alimentation 7 est produite par l'actionnement de la pompe de façon à produire une circulation au travers des chambres d'infusion dans le sens de la flèche indiquée dans le circuit d'extraction 11. Les vannes 8 et 9 sont alors configurées pour orienter la boisson ainsi partiellement produite dans le circuit périphérique 12.

La vanne 9 est telle que la sortie 10 n'est pas ouverte. En configurant les vannes 8 et 9 de façon à constituer un circuit fermé avec le circuit d'extraction 11 et le circuit périphérique 12, on peut opérer une circulation à plusieurs reprises dans les chambres d'infusion. Par ailleurs, par inversion du sens de la pompe, cette circulation peut s'opérer en sens inverse.

Lorsque les recirculations ont été opérées, la vanne 9 est ouverte en direction de la sortie 10 de façon à évacuer la boisson.

Par commande des vannes 8, 9 et de la pompe, on peut aisément définir le nombre de circulation à opérer ainsi que leur sens. Des cycles d'inversion peuvent également être produits.

### REFERENCES

1. Conditionnement
2. Chambre d'infusion
7. Alimentation en eau chaude
8. Vanne d'entrée
9. Vanne de sortie
10. Sortie de boisson
11. Circuit d'extraction
12. Circuit périphérique

## Revendications

1. Dispositif de production de boisson par infusion de mouture d'une substance à infuser, comportant une chambre d'infusion apte à recevoir la mouture et un circuit d'eau chaude traversant ladite chambre d'infusion, **caractérisé par le fait**
**qu'**il comporte au moins une chambre d'infusion additionnelle placée en série avec la première chambre d'infusion dans le circuit d'eau chaude.

2. Dispositif selon la revendication 1 **caractérisé par le fait**
**qu'**il comporte une chambre d'infusion additionnelle.

3. Dispositif selon la revendication 2 **caractérisé par le fait**
**qu'**il comporte une partie centrale fixe coopérant avec une première partie latérale mobile pour former la première chambre d'infusion et avec une deuxième partie mobile pour former la chambre d'infusion additionnelle.

4. Dispositif selon l'une quelconque des revendications 1 à 3 **caractérisé par le fait**
**que** le circuit d'eau chaude comprend un circuit d'extraction traversant les chambres d'infusion et un circuit périphérique (12) parallèle au circuit d'extraction (11) entre une vanne d'entrée (8), en amont des chambres d'infusion, et une vanne de sortie (9), en aval des chambres d'infusion, lesdites vannes (8, 9) étant configurées pour permettre la circulation en circuit fermé dans le circuit d'extraction (11) et le circuit périphérique (12)

5. Dispositif selon la revendication 4 **caractérisé par le fait**
**que** la vanne d'entrée (8) possède une voie connectée à l'alimentation en eau chaude (7).

6. Dispositif selon la revendication 5 **caractérisé par le fait**
**que** la vanne de sortie (9) possède une voie connectée à la sortie de boisson (10).

7. Dispositif selon l'une quelconque des revendications 1 à 6 **caractérisé par le fait**
**qu'**il présente des moyens pour inverser la circulation d'eau chaude au travers des chambres d'infusion

8. Dispositif selon la revendication 7 **caractérisé par le fait**
**qu'**il comporte une pompe pour la mise en circulation de l'eau chaude, ladite pompe ayant un sens de fonctionnement commandé pour former les moyens pour inverser la circulation d'eau chaude au travers des chambres d'infusion.

9. Dispositif selon la revendication 4 **caractérisé par le fait**
**que** le circuit d'extraction (11) et le circuit périphérique (12) présentent globalement un volume correspondant à celui de la boisson à produire.

10. Machine à café utilisable avec des conditionnements (1) de café moulu **caractérisée par le fait**
**qu'**elle comporte un dispositif selon l'une quelconque des revendications 1 à 9.

## Claims

1. Device for making a beverage by infusion of a ground substance, comprising an infusion chamber able to receive the ground substance and a hot water circuit crossing the aforementioned infusion chamber, **characterised in that**
it comprises at least one additional infusion chamber positioned in series with the first infusion chamber on the hot water circuit.

2. Device according to claim 1 **characterized in that** it comprises one additional infusion chamber.

3. Device according to claim 2 **characterized in that**
it comprises a fixed central part coacting with a first mobile lateral part to form the first infusion chamber and with a second mobile part to form the additional infusion chamber.

4. Device according to any of claims 1 to 3 **characterized in that**
the hot water circuit includes an extraction circuit crossing the infusion chambers and a peripheral circuit (12) parallel to extraction circuit (11) between an intake valve (8), upstream of the infusion chambers, and an outlet valve (9), downstream of the infusion chambers, the aforementioned valves (8, 9) being arranged to allow closed-circuit circulation in extraction circuit (11) and peripheral circuit (12).

5. Device according to claim 4 **characterized in that**
intake valve (8) has a way connected to hot water supply (7).

6. Device according to claim 5 **characterized in that**
outlet valve (9) has a way connected to beverage outlet (10).

7. Device according to any of claims 1 to 6 **characterized in that**
it presents means for reverse the direction of hot water circulation through the infusion chambers.

8. Device according to claim 7 **characterized in that**
it comprises a pump for circulating the hot water, the aforementioned pump having a controlled direction of operation so as to form the means for reversing the direction of hot water circulation through the infusion chambers.

9. Device according to claim 4 **characterized in that**
extraction circuit (11) and peripheral circuit (12) present an overall volume that matches the volume of beverage to be made.

10. Coffee machine for use with prepackaged ground coffee doses (1) **characterized in that**
it includes a device according to any of claims 1 to 9.

## Patentansprüche

1. Vorrichtung zur Herstellung von Getränken durch Brühen des Mehls einer zu brühenden Substanz mit einer Brühkammer, welche das Mehl aufnehmen kann und einem Wasserzufuhrsystem, das die genannte Brühkammer durchquert, **gekennzeichnet dadurch,**
**dass** sie mindestens eine zusätzliche Brühkammer besitzt, die mit der ersten Brühkammer in dem Wasserzufuhrsystem in Serie geschaltet ist.

2. Vorrichtung gemäss Anspruch 1, **gekennzeichnet dadurch,**
**dass** sie eine zusätzliche Brühkammer besitzt.

3. Vorrichtung gemäss Anspruch 2, **gekennzeichnet dadurch,**
**dass** sie einen zentralen, unbeweglich angeordneten Teil aufweist, der mit einem ersten, beweglichen Seitenteil zusammenwirkt, um die erste Brühkammer zu bilden, und mit einem zweiten, beweglichen Teil, um die zusätzliche Brühkammer zu bilden.

4. Vorrichtung gemäss einem der Ansprüche 1 bis 3, **gekennzeichnet dadurch,**
**dass** das Wasserleitungssystem ein Extraktionssystem enthält, das die Brühkammern durchquert sowie ein Peripheriesystem (12) zwischen einem Eintrittsventil (8) vor den Brühkammern und einem Austrittsventil (9) nach den Brühkammern, das zum Extraktionssystem (11) parallel geschaltet ist, wobei beide Ventile (8, 9) so konfiguriert sind, dass im Extraktionssystem (11) und im Peripheriesystem (12) eine Strömung in geschlossenem Kreislauf möglich ist.

5. Vorrichtung gemäss Anspruch 4, **gekennzeichnet dadurch,**
**dass** das Eintrittsventil (8) eine Leitung besitzt, welche an die Warmwasserversorgung (7) angeschlossen ist.

6. Vorrichtung gemäss Anspruch 5, **gekennzeichnet dadurch,**
**dass** das Ausgangsventil (9) eine Leitung besitzt, welche mit dem Austritt des Getränks (10) verbunden ist.

7. Vorrichtung gemäss einem der Ansprüche 1 bis 6, **gekennzeichnet dadurch,**
**dass** es Mittel zur Umkehr des Warmwasserstroms durch die Brühkammern besitzt.

8. Vorrichtung gemäss Anspruch 7, **gekennzeichnet dadurch,**
**dass** sie eine Warmwasser-Umwälzpumpe besitzt, deren Förderrichtung steuerbar ist, um ein Mittel zur Umkehrung des Warmwasserstroms durch die Brühkammern zu bilden.

9. Vorrichtung gemäss Anspruch 4, **gekennzeichnet dadurch,**
**dass** das Extraktionssystem (11) und das Peripheriesystem (12) annähernd ein Volumen bilden, das dem des herzustellenden Getränks entspricht.

10. Kaffeemaschine, die mit Kaffeemehl-Verpackungen arbeitet und **dadurch gekennzeichnet ist,**
**dass** sie eine Vorrichtung gemäss einem der Ansprüche 1 bis 9 enthält.
